# EUROPÄISCHE PATENTANMELDUNG

(11) **EP 1 626 176 A2**
(43) Veröffentlichungstag der Anmeldung: **15.02.2006**
(21) Anmeldenummer: 04029214.6
(22) Anmeldetag: 09.12.2004
(51) Int. Cl.: F03D 9/00

(54) **Windkraftanlage mit einem Solarwandler**

(30) Priorität: 09.08.2004 DE 102004039009; 23.11.2004 DE 102004056627; 26.10.2004 WO PCT/DE20/04002377; 25.11.2004 WO PCT/DE20/04002609
(71) Anmelder: Tausch, Andreas, 39291 Hohenwarthe (DE)
(72) Erfinder: Tausch, Andreas, 39291 Hohenwarthe (DE)
(74) Vertreter: Maiwald Patentanwalts GmbH

(57) **Zusammenfassung**

Es wird eine Hybridwindkraftanlage vorgestellt, bei der zumindest ein Solarwandler auf einem Läufer der Windkraftanlage angeordnet ist.

## Beschreibung

Die vorliegende Erfindung betrifft Windkraftanlagen sowie die Speicherung von mittels Windkraftanlagen erzeugter Energie. Insbesondere betrifft die vorliegende Erfindung eine Windkraftanlage, einen Windableiter für eine Windkraftanlage, ein Steuergerät für eine Windkraftwasserstofferzeugungseinrichtung sowie eine Wasserstofferzeugungseinrichtung zur Speicherung von Energie, die mittels einer Windkraftanlage erzeugt worden ist.

Es sind eine Vielzahl von Windkraftanlagen bekannt. Die im Wind enthaltene Strömungsenergie kann theoretisch bis zu max. 59,3 % entnommen werden. Dieser Wert, der die dem Wind entnommene Leistung ins Verhältnis mit der im Wind enthaltenen Leistung setzt, wird Betzsches Gesetz oder Betzscher Leistungswert (c_{p, betz}) genannt und wurde von Albert Betz im Jahr 1926 ermittelt.

Anschaulich und prinzipiell ist dieser Sachverhalt auch so zu erklären: Wenn der Windströmung (kinetische) Energie entnommen wird, verlangsamt sich der Wind. Da der Massestrom jedoch konstant ist, weitet sich bei einer frei angeströmten Windenergieanlage der Wind auf, da bei der langsamen Geschwindigkeit hinter der Anlage die gleiche Menge Luft über einen größeren Querschnitt abtransportiert werden muss. Aus diesem Grunde ist eine vollständige Umwandlung der Windenergie in Rotationsenergie mit einer Windenergieanlage nicht möglich. Ein solcher Fall würde bedeuten, dass hinter der Windenergieanlage die Luftmassen ruhen und sich vor ihr unendlich aufstauen würden.

Wie bei allen anderen Maschinen wird natürlich auch hier das theoretische Maximum nicht erreicht. Gute Windenergieanlagen haben heutzutage einen Leistungsbeiwert von 0,4 bis 0,5. Der aerodynamische Wirkungsgrad einer Anlage kann über das Verhältnis des Leistungsbeiwertes der Maschine zum Betzschen Leistungsbeiwert ausgedrückt werden und liegt hiernach bei etwa 70 bis 85 % im Auslegungspunkt. Es besteht natürlich ein Bedürfnis, dieses Verhältnis möglichst nahe zu 100 % zu bringen.

Es gibt zwei verschiedene physikalische Prinzipien, nach denen eine Windenergieanlage arbeiten kann. Nach dem ersten physikalischen Prinzip ausgestaltete Windkraftanlagen weisen einen Auftriebsläufer auf. Bei solchen Anlagen sind die Rotorblätter als aerodynamisches Profil ausgeprägt, das ähnlich wie bei Flugzeugen durch einen Druckunterschied, der aus einem Geschwindigkeitsunterschied an Flügelsaug- und Druckseite herrührt, einen Auftrieb erzeugt. Dieser Auftrieb wird in eine Drehbewegung umgesetzt.

Das zweite heute gebräuchliche physikalische Prinzip betrifft die sog. Widerstandsläufer. Diese Anlagen setzen dem Wind ihre Rotorfläche entgegen und wandeln den Druck des Windes in eine Drehbewegung um. Diese Anlagen sind aufgrund des höheren Drehmoments gut beispielsweise für das Verrichten von mechanischer Arbeit geeignet. Widerstandsläufer haben häufig einen schlechten Wirkungsgrad, sind jedoch oft einfach und robust aufgebaut. Bei einem Widerstandsläufer ist die Schnelllaufzahl immer kleiner als 1.

Der Betrieb einer Windenergieanlage ist in der Regel nur ab einer bestimmten Windgeschwindigkeit, der sog. Anlauf- oder Einschaltgeschwindigkeit sinnvoll. Sie liegt bei den heute verwendeten Anlagen in der Regel bei etwa 2 bis 4 m pro Sekunde, was der Windstärke 2 bis 3 entspricht. Ist die Windgeschwindigkeit zu gering, lässt man die Anlage trudeln, d. h. die Blätter werden in Segelstellung gedreht und die Anlage befindet sich im Leerlauf. Bei Widerstandsläufern wird der Läufer häufig auch blockiert. Der an dem Läufer angekoppelte Generator wird unterhalb der Anlaufgeschwindigkeit in der Regel vom Stromnetz getrennt. Im Leerlauf wird die Anlage zu einem Stromverbraucher, da die Regelelektronik und die Stellantriebe für beispielsweise Rotorblattverstellung und Windnachfiihrung mit Energie aus dem Netz versorgt werden. Die Anlagen besitzen auch eine Notstromversorgung, um bei Netzausfall ein sicheres Abschalten, was beispielsweise ein Drehen der Blätter in Segelstellung mit sich bringt, zu gewährleisten.

Es ist eine Aufgabe der vorliegenden Erfindung, eine verbesserte Windkraftanlage anzugeben.

Gemäß einem Ausführungsbeispiel der vorliegenden Erfindung wird eine Windkraftanlage angegeben, die einen Läufer aufweist. Ferner weist die Windkraftanlage zumindest einen Solarwandler zur Wandlung von Sonnenenergie in eine der Sonnenenergie unterschiedliche Energieform auf. Beispielsweise kann der Solarwandler eine Solarzelle sein, die Sonneneinstrahlung in elektrische Energie wandelt. Der Solarwandler ist an dem Läufer angeordnet.

In vorteilhafter Art und Weise kann damit beispielsweise erreicht werden, dass die Windkraftanlage auch unterhalb der Anlaufgeschwindigkeit autark betrieben werden kann, d. h. kein Stromverbraucher ist. Die notwendige Energie zum Betreiben der Windkraftanlage unterhalb der Anlaufgeschwindigkeit kann damit von den Solarwandlern zur Verfügung gestellt werden. Dies ermöglicht ferner das Angeben einer Windkraftanlage, die netzautark betrieben werden kann.

Gemäß einem weiteren Ausführungsbeispiel der vorliegenden Erfindung ist der Läufer der Windkraftanlage ein Widerstandsläufer. Üblicherweise weisen diese Art von Läufer eine große Oberfläche auf, die dann mit einer großen Anzahl bzw. einer großen Fläche von Solarwandlern versehen werden können. Auf diese Art und Weise kann sichergestellt werden, dass eine ausreichende Menge beispielsweise an Solarstrom erzeugt werden kann. Die erzeugte Energie kann beispielsweise auch verwendet werden, um den Läufer auf eine untere Mindestgeschwindigkeit zu bringen. Hierfür können die oder der Solarwandler mit einem Magnetmotor gekoppelt werden, der den Läufer beim Anlaufen unterstützt.

Gemäß einem weiteren vorteilhaften Ausführungsbeispiel der vorliegenden Erfindung wird eine Windkraftanlage angegeben, wobei der Läufer eine vertikale Rotationsachse aufweist. Dies ermöglicht vorteilhaft eine Windkraftanlage, die ohne Turm ausgestaltet werden kann.

Gemäß einem weiteren vorteilhaften Ausführungsbeispiel der vorliegenden Erfindung weist der Solarwandler zumindest eine Solarzelle auf zur Wandlung von Solarenergie in elektrische Energie.

Gemäß einem weiteren vorteilhaften Ausführungsbeispiel der vorliegenden Erfindung weist die Windkraftanlage einen Windableiter auf, der derart an die Windrichtung anpassbar ist, dass der Windableiter jeweils in Windrichtung vor dem Läufer angeordnet ist. Der Windableiter ist so konstruiert, dass über mindestens eine zusätzlich angeordnete Windleitfläche auf dem Windableiter, der Winddruck gezielt zusätzlich auf den Läufer geleitet wird. Das hat neben der erheblichen Winddruckerhöhung auf den Läufer außerdem noch den Effekt, die sonst möglicherweise entstehende Unterdruckwirkung und Verwirbelung durch den abgeleiteten Wind auf der abzudeckenden Seite des Windrades, die unter Umständen Leistung mindernd ist, entgegen zu wirken.

Ein weiteres vorteilhaftes Ausführungsbeispiel der vorliegenden Erfindung betrifft eine Windkraftanlage, die zur Kopplung an eine Wasserstofferzeugungseinrichtung ausgestaltet ist. Insbesondere sind die Leistungsdaten der Windkraftanlage den Leistungsdaten der Wasserstofferzeugungseinrichtung angepasst. In vorteilhafter Art und Weise kann damit mittels der Windkraftanlage erzeugte Energie in Form von Wasserstoff gespeichert werden.

Gemäß einem weiteren vorteilhaften Ausführungsbeispiel der vorliegenden Erfindung wird ein Windableiter für eine Windkraftanlage mit einem Widerstandsläufer mit vertikaler Rotationsachse angegeben, umfassend zumindest eine Windableitfläche, wobei die Windableitfläche derart ausgestaltet ist, dass eine erste Windströmung von einem ersten Bereich des Läufers, in dem die erste Windströmung auf den Läufer eine Kraft entgegen der Drehrichtung des Läufers verursacht, weggeleitet wird und wobei die Windableitfläche derart ausgestaltet ist, dass eine zweite Windströmung auf einen zweiten Bereich des Läufers, in dem die zweite Windströmung auf den Läufer eine Kraft in der Drehrichtung des Läufers verursacht, geleitet wird.

In vorteilhafter Art und Weise kann dadurch erzielt werden, dass der gewollten Drehrichtung des Läufers entgegengesetzte Windkräfte verhindert bzw. abgeleitet werden. In anderen Worten wird eine Windströmung von Bereichen des Läufers abgeleitet, auf denen die Windströmung eine Kraft entgegen der Drehrichtung des Läufers erzeugen würde. Darüber hinaus kann der Windableiter so ausgestaltet sein, dass eine weitere Windströmung besonders auf einen weiteren Bereich des Läufers geleitet wird, wo dann eine Kraft auf den Läufer durch die Windströmung erzeugt wird, die in Richtung der Drehrichtung des Läufers ist.

Gemäß einem weiteren Ausführungsbeispiel der vorliegenden Erfindung weist der Windableiter eine Halterung auf. Die Halterung ist derart drehbar um die Rotationsachse ausgestaltet, dass eine Position der Windableitfläche der Windrichtung anpassbar ist. Ferner können an dem Windableiter ein oder mehrere Solarwandler vorgesehen sein.

Durch die Halterung wird ermöglicht, dass die Position der Windableitflächen entsprechend der Windrichtung angepasst und optimiert werden kann. Durch das Vorsehen des Solarwandlers kann beispielsweise beim Anbringen des Windableiters an der Windkraftanlage eine Energieerzeugungseinrichtung zur Verfügung gestellt werden, die sowohl als Solar als auch aus Windkraft Energie erzeugt. Beispielsweise kann die Energie des Solarwandlers zum Hochfahren der Windkraftanlage verwendet werden, aber auch zum Sicherstellen des Betriebes der Windkraftanlage unter der Anlaufgeschwindigkeit der Windkraftanlage.

Gemäß einem weiteren Ausführungsbeispiel der vorliegenden Erfindung weist die Windableitfläche einen im Wesentlichen konkaven Bereich oder zwei im Wesentlichen konkave Bereiche auf. Mittels der konvexen bzw. konkaven Ausgestaltung des Windableiters kann ein Ableiten bzw. Trennen der Windströmungen erzielt werden.

Gemäß einem weiteren vorteilhaften Ausführungsbeispiel der vorliegenden Erfindung wird ein Steuergerät für eine Windkraftwasserstofferzeugungseinrichtung angegeben, wobei die Windkraftwasserstofferzeugungseinrichtung eine Windkraftanlage sowie eine an die Windkraftanlage gekoppelte Wasserstofferzeugungsanlage aufweist. Das Steuergerät umfasst ein erstes Modul zur Steuerung der Windkraftanlage und ein zweites Modul zur Steuerung der Wasserstofferzeugungsanlage. Beide Module sind zu einer gekoppelten Steuerung zusammengefasst, so dass das Steuergerät sowohl den Betrieb der Windkraftanlage als auch der Wasserstofferzeugungsanlage steuern kann sowie den Betrieb beider Anlagen aufeinander abstimmen kann.

Gemäß einem weiteren Ausführungsbeispiel der vorliegenden Erfindung wird eine Wasserstofferzeugungseinrichtung angegeben, wobei die Wasserstofferzeugungseinrichtung zur Kopplung mit einer Windkraftanlage ausgestaltet ist. In vorteilhafter Art und Weise ermöglicht dies beispielsweise das Erzeugen von Wasserstoff mittels Energie, die mit der Windkraftanlage gewonnen wird. Um eine Kopplung beider Anlagen zu ermöglichen, müssen die Leistungsdaten sowohl der Windkraftanlage als auch der Wasserstofferzeugungseinrichtung aufeinander abgestimmt werden, insbesondere sind die Verfahrensparameter bei der Wasserstofferzeugung derart anzupassen, dass beispielsweise ein plötzliches Abflauen des Windes die Wasserstofferzeugungseinrichtung nicht in einen kritischen Zustand bringt.

Gemäß einem weiteren vorteilhaften Ausführungsbeispiel der vorliegenden Erfindung weist die Wasserstofferzeugungseinrichtung einen Wasserstofftank zur Speicherung des Wasserstoffs auf. In vorteilhafter Art und Weise kann damit lokal Wasserstoff durch mittels der Windkraftanlage erzeugte Energie erzeugt werden und lokal in dem Wasserstofftank abgespeichert werden. Bei Bedarf, beispielsweise bei Windstille, kann dann der Wasserstoff im Wasserstofftank genutzt werden, um Energie zu erzeugen.

Gemäß einem weiteren vorteilhaften Ausführungsbeispiel der vorliegenden Erfindung, weist die Wasserstofferzeugungseinrichtung eine Brennstoffzelle auf.

Im Folgenden werden mit Verweis auf die Figuren bevorzugte Ausführungsbeispiele der vorliegenden Erfindung beschrieben.

Fig. 1 zeigt eine Seitenansicht einer Windkraftanlage mit Solarwandlern gemäß einem ersten Ausführungsbeispiel der vorliegenden Erfindung.

Fig. 2 zeigt eine Seitenansicht einer Windkraftanlage mit einem Solarwandler gemäß einem zweiten Ausführungsbeispiel der vorliegenden Erfindung.

Fig. 3 zeigt eine Prinzipskizze einer Windkraftanlage mit einer Vielzahl von Solarwandlern gemäß einem dritten Ausführungsbeispiel der vorliegenden Erfindung.

Fig. 4 zeigt eine Fotomontage bzw. Prinzipskizze einer Windkraftanlage mit Solarwandlern gemäß einem vierten Ausführungsbeispiel der vorliegenden Erfindung.

Fig. 5 zeigt eine Draufsicht auf eine Windkraftanlage mit einem Windableiter gemäß einem Ausführungsbeispiel der vorliegenden Erfindung.

Fig. 6 zeigt eine Draufsicht auf eine Windkraftanlage mit einem Windableiter gemäß einem Ausführungsbeispiel der vorliegenden Erfindung.

Fig. 7 zeigt eine Draufsicht auf eine Windkraftanlage mit einem Magnetfeldantrieb gemäß einem weiteren Ausführungsbeispiel der vorliegenden Erfindung.

Fig. 8 zeigt eine Prinzipskizze einer Windkraftanlage mit Solarwandlern, die mit einer Wasserstofferzeugungseinrichtung und einem Wasserstofftank gekoppelt ist.

Fig. 9 zeigt eine Prinzipskizze eines weiteren Ausführungsbeispiels des Windableiters zur Umlenkung des Windstroms.

Fig. 10 zeigt eine Prinzipskizze eines weiteren Ausführungsbeispiels des Windableiters zur Umlenkung des Windstroms.

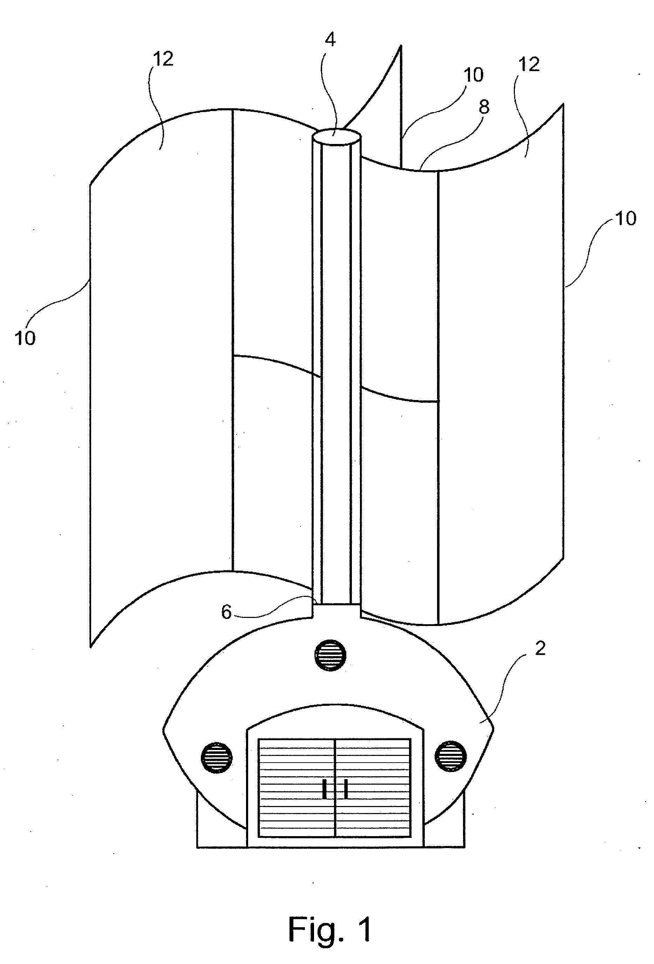

In der folgenden Beschreibung der Figuren 1 bis 10 werden die gleichen Bezugsziffern für die gleichen oder sich entsprechenden Elemente verwendet.

Fig. 1 zeigt eine Seitenansicht eines ersten Ausführungsbeispiels einer Windkraftanlage gemäß der vorliegenden Erfindung. Bezugsziffer 2 bezeichnet ein Fundament, auf dem eine Basisstation angeordnet ist zur Aufnahme eines Generators und/oder eines Wandlers. Auf dem Dach der Basisstation 2 ist ein Lager 6 angeordnet zur Aufnahme und Lagerung der Rotationsachse 4 des Läufers 8. Der in Fig. 1 dargestellte Läufer 8 weist drei Flügel 10 mit entsprechenden Windaufnahmeflächen auf. Die Flügel 10 weisen jeweils eine konvexe und eine konkave Seite auf. Die konvexe Seite weist entgegen der vorgesehenen Drehrichtung des Läufers 8; die konkave Seite der Flügel weist jeweils in die Drehrichtung des Läufers 8.

Die Bezugsziffer 12 bezeichnet Solarwandler, die auf den Flügeln angeordnet sind. Vorzugsweise sind dies beispielsweise Solarzellen zur Wandlung von Sonnenenergie in elektrische Energie. Wie Fig. 1 zu entnehmen ist, können die Solarzellen und bzw. Solarwandler 12 Bereiche der konvexen Seiten der Flügel 8 bedecken, aber auch Bereiche auf den konkaven Bereichen der Flügel 8.

Der in Fig. 1 dargestellte Läufer 8 ist ein Widerstandsläufer mit einer vertikalen Rotationsachse 4.

Wie zuvor schon angedeutet, brauchen Windkraftanlagen im Allgemeinen eine gewisse Windgrundgeschwindigkeit, um den Betrieb zu ermöglichen, d. h. um die Stromerzeugung durch Windenergie zu ermöglichen. Üblicherweise benötigen solche Windkraftanlagen jedoch eine gewisse Grundenergie auch bei Windstille bzw. bei Windstärken unter der Mindestwindgeschwindigkeit. Vorzugsweise ist eine Gesamtfläche der Solarwandler 12 derart ausgestaltet, dass eine Grundenergieversorgung der Windkraftanlage bei Windstille oder unterhalb der Mindestwindgeschwindigkeit sichergestellt wird, so dass eine autarke Windkraftanlage angegeben werden kann. Es kann ebenfalls vorteilhaft sein, dass ein Wirkungsgrad der Solarwandler 12 indirekt proportional zu dem Wirkungsgrad der Windkraftanlage ist. In anderen Worten wenn kein Wind ist, sind die Solarwandler 12 statisch zur Sonneneinstrahlung. Es kann sein, dass in diesem Zustand ein Wirkungsgrad der Solarwandler relativ hoch ist. Mit steigender Rotationsgeschwindigkeit des Läufers kann sich die mittels der Solarwandler erzeugte Energie verringern, da die Solarwandler jeweils nur kurze Zeit optimal zur Sonneneinstrahlung ausgerichtet sind. Allerdings steigt mit steigender Rotationsgeschwindigkeit die Energieausbeute durch Windkraft.

Die auf dem Windabweiser integrierten Solarwandler kompensieren dabei entstehende Verringerungen der Energieausbeute der auf dem Läufer integrierten Solarwandler.

Eine weiter Erhöhung der Energieausbeute durch die Solarwandler wird möglich, wenn die Solarwandler in mehrteiligen Segmenten bei einem Anstellwinkel von 28 Grad auf dem Läufer integriert werden. Der Läufer kann auch grundsätzlich in einem Anstellwinkel von 28 Grad zur vertikalen Achse angebracht werden. Die dabei entstehenden Windruckverluste können über einen am oberen Ende des Läufers angebrachten Windfang kompensiert werden.

Auf diese Art und Weise kann eine hybride Anlage zur gleichzeitigen bzw. auch zur unabhängigen Nutzung von Wind- und Solarenergie über gemeinsame Konstruktionsteile als Energieaufnahmeflächen geschaffen werden.

Ferner ist es möglich, eine effektivere Nutzung von Wind- und Solarenergie zu erreichen. Weiterhin gewährleistet die vorliegende Erfindung eine umweltschonende Nutzung von natürlichen Ressourcen, ohne die bisher notwendigen großen Fundamentbetonierungen für herkömmliche Windkrafträder bei einem dazu noch vergleichbar geringen Herstellungsaufwand für die Hybridanlage. Ferner, da die Windkraftanlage autark ausgestaltet werden kann, kann beispielsweise ein aufwendiger Anschluss zu einem Stromnetz zur Weiterleitung weggelassen werden.

Die Solarwandler, die auch als Energieaufnahmeflächen bezeichnet werden können, können auch vertikal oder horizontal verschiebbar oder variabel angeordnet sein. Die kinetische Energie des Läufers wird über die Rotationsachse 4 an einen Generator in der Basisstation 2 übertragen oder an andere mögliche Stromerzeuger oder Energiewandler weitergeleitet. Die Solarenergie kann beispielsweise mittels Schleifkontakten an die Basisstation weitergeleitet werden. Die Solarenergie kann jedoch auch über die Drehachse 4 in die Basisstation geleitet werden.

Wie zuvor schon angesprochen, kann durch die mittels der Solarwandler erzeugten Energie, die beispielsweise auch zwischengespeichert werden kann, eine Anlaufenergie zur Verfügung gestellt werden, die beispielsweise für ein Darrieus-Windrad nach einer Windstille erforderlich ist. Die notwendige Anlaufenergie entspricht der Energie, die erforderlich ist, das Windrad auf die Anlaufgeschwindigkeit zu beschleunigen.

In vorteilhafter Art und Weise ermöglicht die vorliegende Erfindung eine Windkraftanlage mit einer geringen Bauhöhe, welche ein vereinfachtes Genehmigungsverfahren mit sich bringt. Überdies können geringe Bau- und Planungskosten erzielt werden. Ferner weisen die Windkraftanlagen gemäß der vorliegenden Erfindung durch die Mehrfachnutzung der Energieaufnahmeflächen einen sehr hohen Rentabilitätsgrad auf. Durch die in Fig. 1 gezeigte ebenerdige Anordnung des Generators und der darüber liegenden Energiegewinnungskonstruktion ist die Nutzung der Energieanlage ohne aufwendige und teuere Porotonfundamente möglich. Der in Fig. 1 gezeigte Aufbau der Windkraftanlage gemäß der vorliegenden Erfindung ermöglicht beispielsweise eine modulare Bauweise, die einen einfachen Auf- und Abbau der Anlage ermöglicht. Dadurch kann eine schnelle Amortisation der Anlage erzielt werden. Ferner weist die Anlage gemäß der vorliegenden Erfindung eine geringe Störanfälligkeit und Wartungskosten auf.

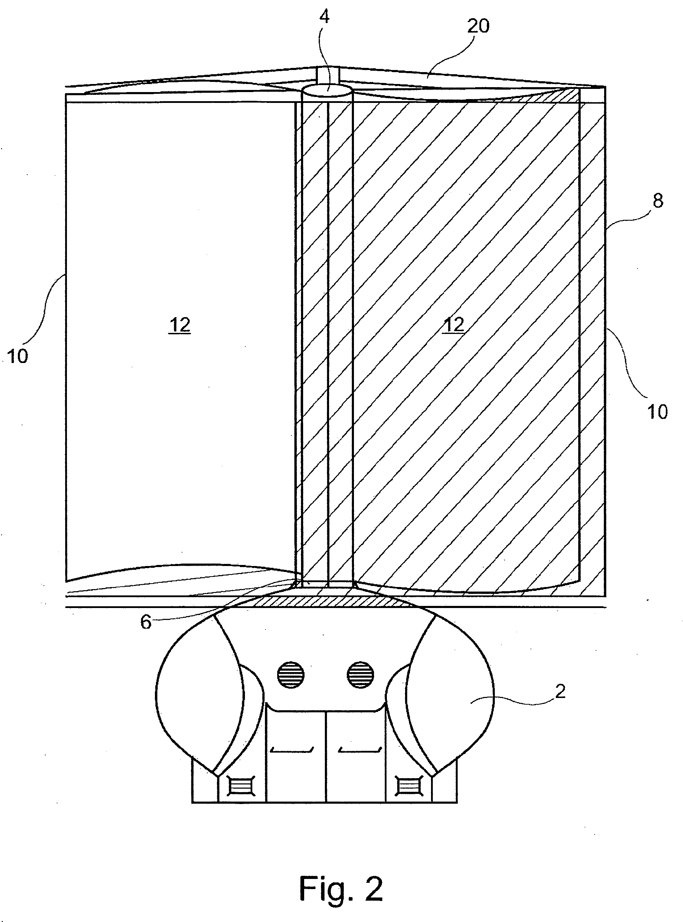

Fig. 2 zeigt ein weiteres Ausführungsbeispiel der Windkraftanlage gemäß der vorliegenden Erfindung. Wie Fig. 2 zu entnehmen ist, weist die Windkraftanlage gemäß dieses Ausführungsbeispiels eine Stützkonstruktion 20 auf. Insbesondere weist die Windkraftanlage vertikale Träger zur Stabilisierung des Läufers 8 auf. Wie Fig. 2 auch zu entnehmen ist, sind über die gesamten Flächen des Läufers Solarwandler vorgesehen.

Vorzugsweise sind als Solarwandler in allen Ausführungsbeispielen der vorliegenden Erfindung Solarzellen vorgesehen. Diese können monokristallin, polykristallin aber auch amorph sein. Besonders vorteilhaft können monokristalline Solarzellen sein, die einen hohen Wirkungsgrad aufweisen.

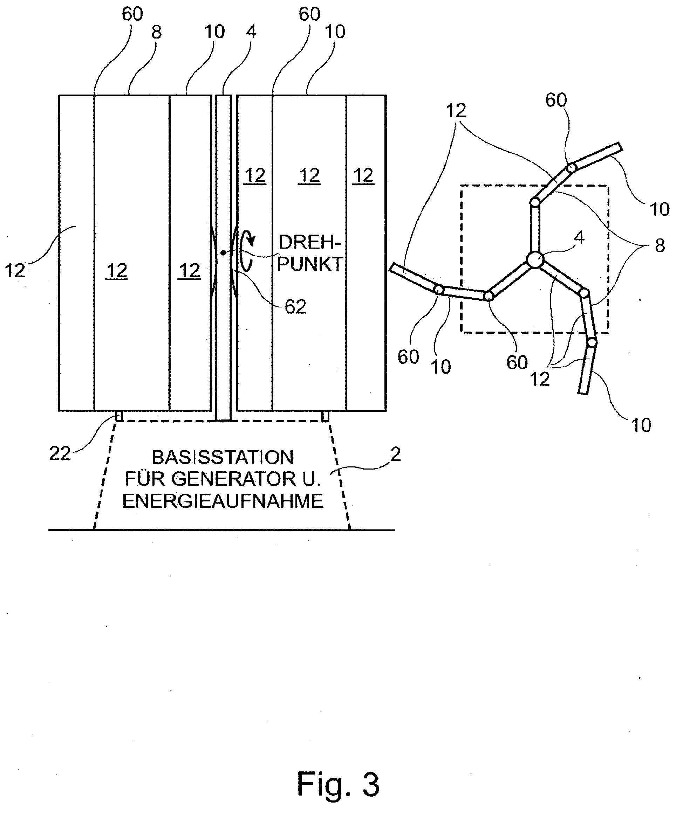

Fig. 3 zeigt eine Prinzipskizze eines dritten Ausführungsbeispiels einer Windkraftanlage gemäß der vorliegenden Erfindung. In dem Ausführungsbeispiel von Fig. 3 weist der Läufer 8 Flügel 10 auf, die beispielsweise aus einzelnen Solarpaneelen 12 bestehen, die mittels Gelenken 60 verbunden sind. Diese Gelenke 60 können beispielsweise als Scharniere ausgebildet sein. Durch ein entsprechendes Ein- und Ausklappen der Gelenke 60 bzw. der Solarpaneele 10 lässt sich die Krümmung der Flügel manipulieren. Dadurch lässt sich auch ein Abstand zwischen dem Flügelende und der Rotationsachse 4 vergrößern oder verkleinern, wodurch eine Läufergeschwindigkeit oder auch der Läufer selbst, d. h. z. B. die aerodynamischen Eigenschaften des Läufers 8 an entsprechende Windbedingungen anpassbar sind. Die Solarpaneele 12 können jeweils beidseitig mit Solarzellen versehen sein, aber auch lediglich einseitig. Ferner können die Flügel jeweils um ein Drehgelenk 62 um eine horizontale Drehachse an der Rotationsachse 4 gedreht werden, um den Läufer 8 weiter an entsprechende Windbedingungen anzupassen. Zwischen der Basisstation 2 und den Flügeln 10 des Läufers 8 sind Schleifkontakte 22 vorgesehen, um die in den Solarpaneelen 12 erzeugte elektrische Energie zur Basisstation zu übertragen.

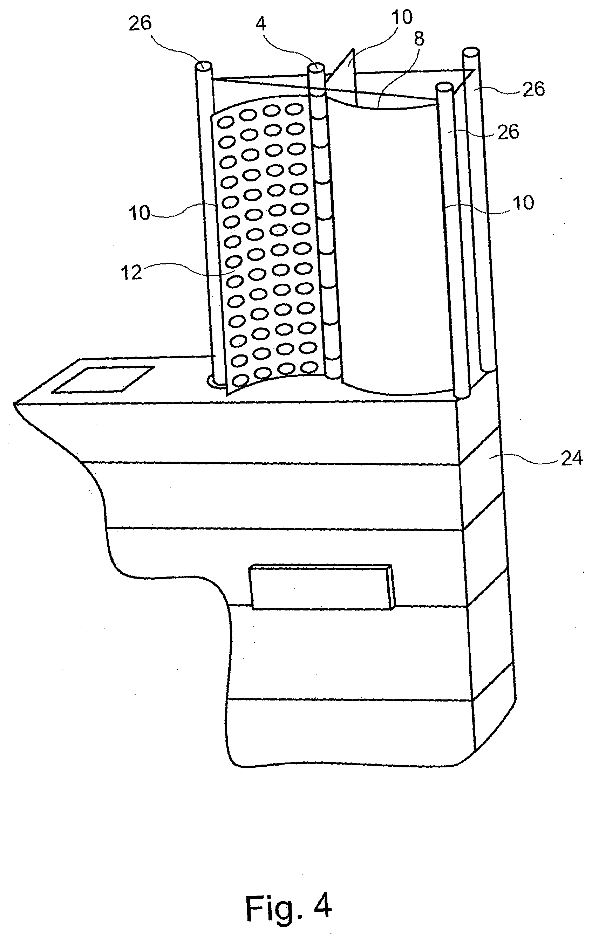

Fig. 4 zeigt ein viertes Ausführungsbeispiel einer Windkraftanlage gemäß der vorliegenden Erfindung. Wie Fig. 4 zu entnehmen ist, ist ein Läufer 8 mittels einer entsprechenden Stützkonstruktion 26 auf einer Off-Shore-Plattform 24 angeordnet. Der Läufer 8 ist ein Widerstandsläufer und weist eine vertikale Rotationsachse 8 auf. Die Stützkonstruktion besteht im Wesentlichen aus drei vertikalen Stützsäulen, die vorzugsweise ein gleichschenkliges Dreieck bilden. Im Brennpunkt des gleichschenkligen Dreiecks kann dann eine Lagerung für einen oberen und einen unteren Drehpunkt der Rotationsachse 4 vorgesehen werden. In der Off-Shore-Plattform 24 kann dann ein entsprechender Generator zur Stromwandlung vorgesehen werden. Die Flügel weisen Photovoltaikanlagen, wie beispielsweise Solarzellen, auf. Die mittels Windkraft bzw. Photovoltaik erzeugte Energie kann dann beispielsweise mittels eines Tiefseekabels zum nächsten Stromnetz übertragen werden. Allerdings kann solch eine Hybridanlage mit Windkraft und Solarenergie auch zur Versorgung der Off-Shore-Plattform 24 mit beispielsweise elektrischer Energie vorgesehen sein.

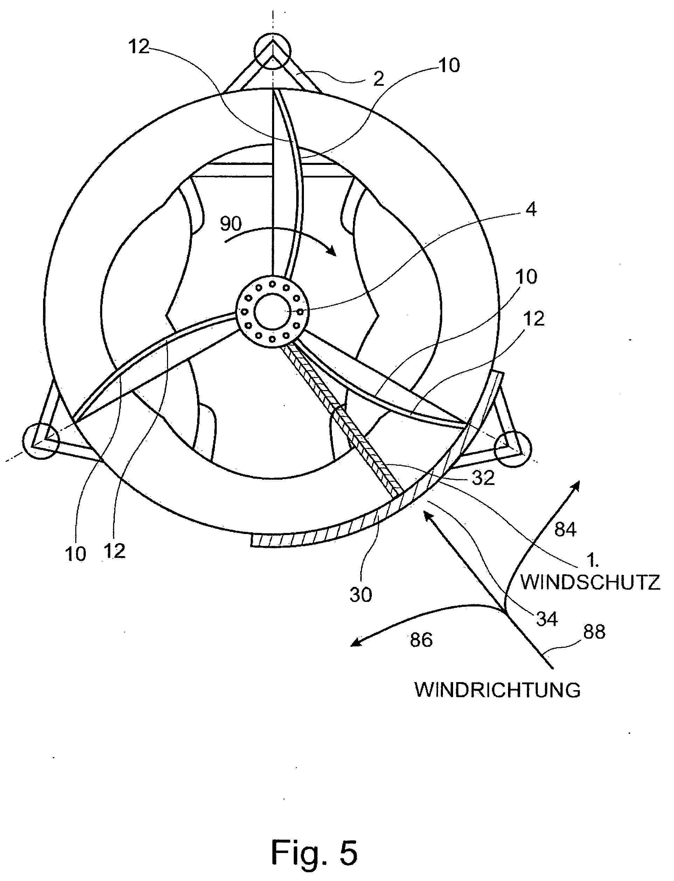

Fig. 5 zeigt ein weiteres Ausführungsbeispiel der Windkraftanlage gemäß der vorliegenden Erfindung in Draufsicht. Die Bezugsziffer 30 in Fig. 5 bezeichnet einen Windableiter. Dieser Windableiter ist gemäß des vorliegenden Ausführungsbeispiels für eine Windkraftanlage mit einem Widerstandsläufer 8 mit vertikaler Rotationsachse 4 ausgestaltet. Der Windableiter umfasst zumindest eine Windableitfläche 34. Die Windableitfläche 34 ist derart ausgestaltet, dass eine Windströmung 88, d. h. der Wind in zumindest zwei Windströmungen aufgeteilt wird. Die erste Windströmung 84 wird von einem ersten Bereich des Läufers 8, indem die erste Windströmung auf den Läufer eine Kraft entgegen der Drehrichtung des Läufers 8 verursacht, weggeleitet. Im vorliegenden Fall ist dies die Windströmung 84. Würde die Windströmung 84 auf die konvexe Seite der Flügel 12, hier auf den unteren rechten Flügel, auftreffen, würde dies eine Kraft entgegen der Drehrichtung 90 des Flügels erzeugen. Durch das Vorsehen der Windableitungsfläche 34 derart, dass die erste Windströmung 84 von diesem Bereich des Läufers 8 weggeleitet wird und an dem Läufer vorbeiströmt, wird erzielt, dass diese Luftströmung die Drehung des Läufers nicht oder nur unwesentlich behindert. Der zweite Teil der Windströmung wird durch die Windableitfläche 34 derart abgeleitet, dass die zweite Windströmung 86 auf den zweiten Bereich des Läufers geleitet wird, indem diese zweite Windströmung 86 auf den Läufer 8 eine Kraft in der Drehrichtung des Läufers verursacht. In anderen Worten wird der störende Wind abgeleitet und der Wind, der eine Kraft auf den Flügel in Richtung der Drehrichtung des Flügels 8 erzeugt, wird verstärkt auf einen Bereich des Flügels gelenkt, wo dieser Wind wirkt.

Die Bezugsziffer 32 in Fig. 5 bezeichnet eine Halterung des Windableiters 30 mittels der der Windableiter 30 an der Rotationsachse 4 der Windkraftanlage angebracht ist. Vorzugsweise ist die Halterung drehbar um die Rotationsachse 4 und der Rotationsachse 4 gehaltert, so dass die Ausrichtung des Windableiters 30 entsprechend der Windrichtung optimiert werden kann.

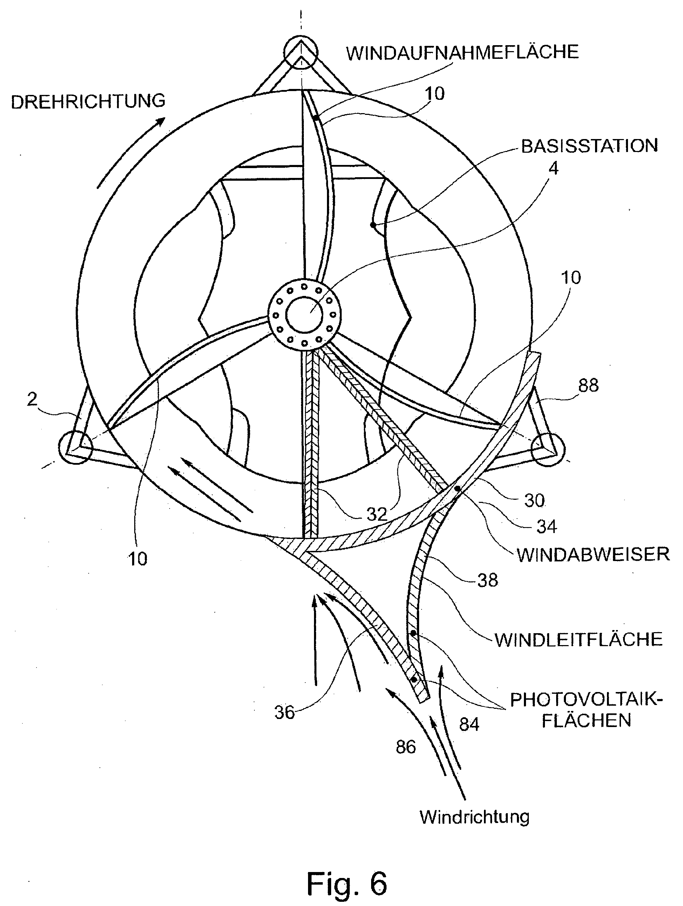

Fig. 6 zeigt eine Windkraftanlage gemäß einer weiteren Ausführungsform gemäß der vorliegenden Erfindung. Gemäß dieser Ausführungsform ist ein Windableiter 30 vorgesehen, der eine Windableitfläche 34 mit einem konkaven Bereich 88, einem konvexen Bereich 38 sowie einem weiteren konvexen Bereich 36 aufweist. Ferner ist im Gegensatz zur Fig. 5 nicht eine Halterung 32 mit einem Haltearm vorgesehen, sondern mit zwei Haltearmen, was eine Stabilisierung des Windableiters 30 ermöglicht. Wie Fig. 6 zu entnehmen ist, bilden die konkaven Flächen 36 und 38 eine Art Dreieck, dessen Spitze genau in den Wind zeigt. Die Spitze teilt dann den Wind in die erste Windströmung 84, die vorzugsweise von den Flügeln weggeleitet wird und in die zweite Windströmung 86, die, wie mittels den Pfeilen in Fig. 6 gezeigt ist, direkt auf den Flügel geleitet wird, so dass der Wirkungsgrad erhöht werden kann. Der an den konkaven Bereich 38 anschließende konvexe Bereich 88 stellt sicher, dass die Windströmung 84 an dem Bereich des Läufers vorbeigeführt wird, an dem die Windströmung eine Kraft entgegen der Drehrichtung erzeugen würde. Gemäß dieses Ausführungsbeispiels kann eine gute Abschirmung des Bereichs, der nicht von dem Wind getroffen werden soll, erzielt werden, als auch eine gute Leitung des zu nutzenden Windes auf den Bereich des Flügels, der gerade die Arbeit leistet.

Wie Fig. 6 zu entnehmen ist, erstreckt sich der Windabweiser über einen Bereich von etwa 80°. Die Erstreckung des Windabweisers bzw. des Windableiters 30 kann entsprechend der vorherrschenden Windstärke angepasst werden.

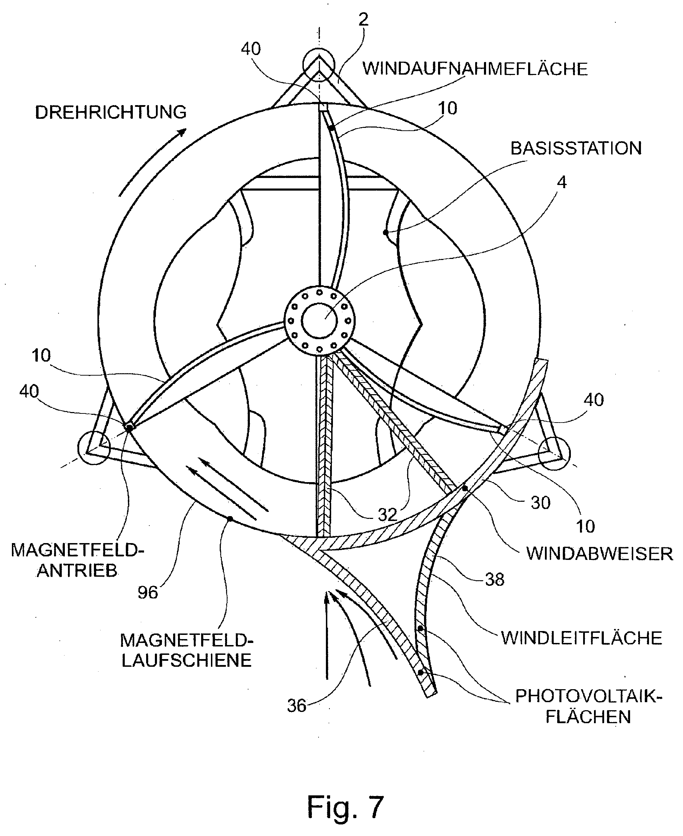

Fig. 7 zeigt eine Draufsicht auf ein weiteres Ausführungsbeispiel der Windkraftanlage gemäß der vorliegenden Erfindung. Im Gegensatz zu dem in Fig. 6 dargestellten Ausführungsbeispiel ist ferner ein Magnetfeldantrieb 40 an den Spitzen bzw. an den Enden der Flügel des Läufers 8 vorgesehen. Ferner ist eine Magnetfeldlaufschiene 96 vorgesehen, die mit dem Magnetfeldantrieb 40 zusammenwirkt. Die Schiene erstreckt sich vorzugsweise in geringem Abstand zu einem Bereich entlang dem der Magnetfeldantrieb 40 an den Flügelenden des Läufers 8 bei der Rotation des Läufers versetzt wird. Durch den Magnetfeldantrieb kann beispielsweise auf einfache Art und Weise der Läufer auf Anlaufgeschwindigkeit beschleunigt werden. Der Magnetfeldantrieb kann beispielsweise direkt von Solarzellen auf den Flügeln gespeist werden.

In vorteilhafter Art und Weise kann der Windableiter gerade den Betrieb von Windkraftanlagen mit vertikaler Achse verbessern. Vom Prinzip her werden durch den Windableiter die der gewollten Drehrichtung des Läufers entgegengesetzten Windkräfte verhindernd abgeleitet. Vorzugsweise wird der Windableiter so gestaltet, dass die Windenergie auf die in Drehrichtung offenen Windaufnahmeflächen, d. h. die konkaven Bereiche der Flügel geleitet wird.

Vorzugsweise ist der Windableiter so ausgestaltet, dass er dabei den momentan nicht zur Windkraftaufnahme nutzbaren Teil der Rotationsflächen der Windkraftanlage abdeckt und somit der Drehrichtung entgegengesetzte Windkräfte verhindert.

In den in den Fig. 5, 6 und 7 gezeigten Ausführungsbeispielen kann vorteilhaft vorgesehen werden, dass auf dem Windableiter 30 vorzugsweise auf den Flächen 34, 36, 38 oder 88 Solarwandler, wie beispielsweise Photovoltaikzellen, vorgesehen werden.

Wie zuvor schon angesprochen, ist der Windableiter vorzugsweise derart ausgestaltet, dass er um die Drehachse 4 freibeweglich in das Windkraftsystem im Außenradius des Bereiches, in dem der Läufer läuft, integriert ist. Die Ausrichtung des Windableiters kann beispielsweise mechanisch in Selbstausrichtung über ein integriertes Windleitsystem ausgestaltet werden oder auch elektronisch gesteuert werden. Vorzugsweise kann selbst bei elektronischer Steuerung des Windableiters ein autarker Betrieb der Windkraftanlage sichergestellt werden, da die Stromversorgung für die elektrische Steuerung beispielsweise durch Photovoltaik auf den Flächen des Windableiters oder der Flügel vorgesehen werden kann.

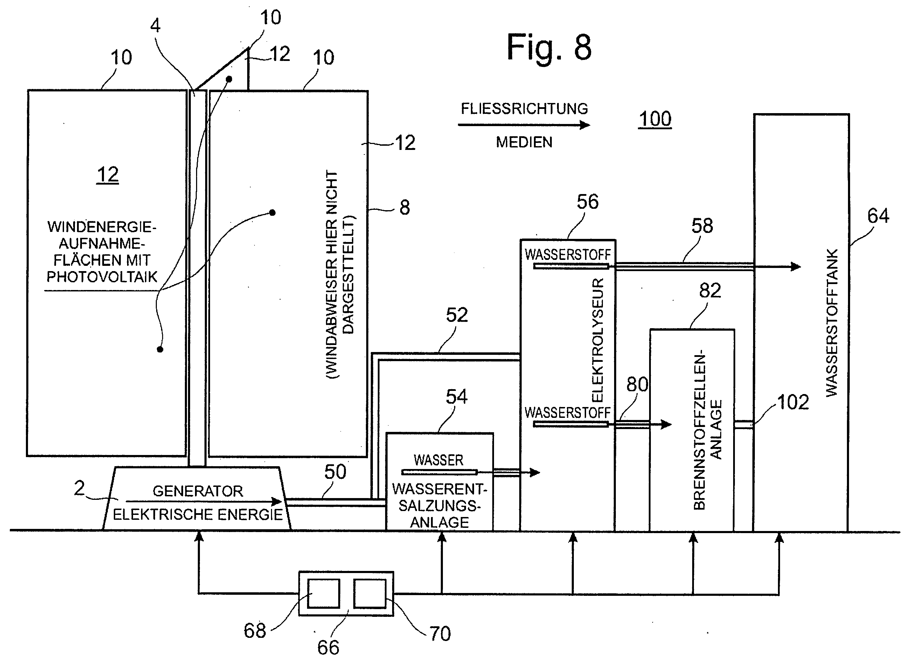

Fig. 8 zeigt eine Prinzipskizze eines weiteren Ausführungsbeispiels gemäß der vorliegenden Erfindung. Da als Windkraftanlage jede der in Fig. 1 bis 7 gezeigten Windkraftanlagen verwendet werden kann, wird hier lediglich auf die Ankoppelung an die Wasserstofferzeugungseinrichtung 100 Bezug genommen. Die Wasserstofferzeugungseinrichtung 100 ist mittels einer Leitung 50, beispielsweise mit einem Generator in der Basisstation 2 verbunden, so dass elektrische Energie von einem Generator an eine Wasserentsalzungsanlage 54 übertragen werden kann. In die Wasserentsalzungsanlage 54 kann beispielsweise Salzwasser aus dem Meer zugeführt werden. Die Wasserentsalzungsanlage 54 führt beispielsweise einen üblichen Wasserverdampfungsprozess zur Entsalzung des Wassers durch. Das Wasser wird dann einer Elektrolyseeinrichtung 56 mittels einer entsprechenden Leitung zugeführt. Die Leitung 50 ist mit einer weiteren Leitung 52 verbunden zur Übertragung von elektrischer Energie an die Elektrolyseeinrichtung 56, wo mittels der elektrischen Energie mittels Elektrolyse aus dem Wasser Wasserstoff erzeugt wird, der mittels einer Leitung 58 beispielsweise an einen Wasserstofftank 64 übertragen wird. Ferner weist die Elektrolyseeinrichtung 56 eine weitere Leitung 80 auf, die beispielsweise ermöglicht Wasserstoff von der Elektrolyseeinrichtung 56 an eine Brennstoffzellenanlage 82 zu übertragen.

Die Bezugsziffer 66 bezeichnet eine Steuereinrichtung, die ein erstes Modul 68 zur Steuerung der Windkraftanlage und ein weiteres Modul 70 zur Steuerung der Elemente der Wasserstofferzeugungseinrichtung aufweist. Die Steuereinrichtung 66 ist ausgestaltet, die Stromerzeugung beispielsweise mittels des Generators an die von den stromverbrauchenden Elementen der Wasserstofferzeugungseinrichtung 100 benötigte Leistung, anzupassen. Die Steuereinrichtung 66 kann beispielsweise mittels einer Prozessorsteuerung, State Machine oder EPLD und entsprechenden Treiberschaltungen ausgestaltet werden.

Wird durch die Windkraftanlage durch Photovoltaik oder Windenergie genügend Strom erzeugt, wird Wasserstoff erzeugt und in dem Wasserstofftank 64 gelagert. Liefert nun die Photovoltaikanlage und/oder die Windkraftanlage oder die Kombination aus beiden nicht ausreichend Energie, kann beispielsweise Wasserstoff durch eine Leitung 102 der Brennstoffzellenanlage 82 zugeführt werden, wodurch mittels der Brennstoffzellenanlage 82 beispielsweise weitere elektrische Energie erzeugt werden kann.

Ferner kann beispielsweise bei Windstille oder bei Windstärken, die gerade um die Anlaufgeschwindigkeit des Rotors 8 liegen, Wasserstoff aus dem Wasserstofftank 64 verwendet werden, um mittels der Brennstoffzellenanlage 82 Strom zu erzeugen, der in den Generator in der Basisstation eingespeist wird, um den Rotor auf die Anlaufgeschwindigkeit zu beschleunigen. Diese Steuerung wird mittels der Steuereinrichtung 66 ausgeführt.

Mittels der in Fig. 8 gezeigten Windkraftanlage, die zur Kopplung an eine Wasserstofferzeugungsanlage ausgestaltet ist, kann eine Kombination von Windsolar- und Wasserenergiegewinnungsanlage mittels geeigneter Wasserstoffproduktionsanlagen angegeben werden.

Vorteilhaft ermöglicht die in Fig. 8 gezeigte Anlage Naturenergien in Form von Wasserstoff zu produzieren bzw. zu speichern und bei Bedarf wieder zur Energieerzeugung freizugeben bzw. kann die Anlage auch der ausschließlichen Erzeugung von Wasserstoff dienen.

Beispielsweise erfolgt die Wasserstoffspeicherung in Edeltanks, die mit Regelkomponenten und Sicherheitseinrichtungen versehen sind. Als Elektrolyseeinrichtung kann beispielsweise eine PEM-Elektrolyseeinrichtung vorgesehen werden. Als Brennstoffzelle kann sowohl eine Hochtemperatur- als auch eine Niedertemperaturbrennstoffzelle verwendet werden.

Überdies ermöglicht die in Fig. 8 gezeigte Anlage das Erzeugen von beispielsweise Trinkwasser mittels Solarenergie und/oder Windenergie. Ferner weist die in Fig. 8 gezeigte Vorrichtung beispielsweise den Vorteil auf, dass auch in Gebieten ohne Infrastruktur, wie beispielsweise in Wüsten, Polargebieten oder auf dem Meer, die erzeugte Energie gespeichert und kontinuierlich produziert oder direkt genutzt werden kann. Bei Energieüberschuss kann die nicht benötigte Energie so beispielsweise in dem Wasserstofftank zwischengespeichert werden und dann direkt als Wasserstoff oder mittels Umwandlung in eine andere Energieform genutzt werden. Beispielsweise kann das System wie folgt genutzt werden:
- Tankstellen mit Wasserstoffverkauf;
- Fuhrpark mit Fahrzeugen mit Wasserstoffmotor;
- Energiegewinnung auf dem Meer mit Energiegewinnungsanlagen auf Pontonflächen (Wasserstofftanks zum Speichern der Energie - keine Kabel);
- Bohrturmanlagen auf See zur Energiegewinnung;
- Wüste - Wasserstoff- statt Ölproduktion;
- Polargebiete - unabhängige Versorgung.

Besonders eignet sich hierfür die hybride Wind- und Solarenergieanlage, wie sie auch mit Verweis auf die Fig. 1 bis 7 beschrieben worden ist, die bei vielen Bedingungen Energie erzeugen kann.

Durch die Autarkie eines solchen Systems ist ein solches System beispielsweise geeignet für Gebiete ohne Infrastruktur.

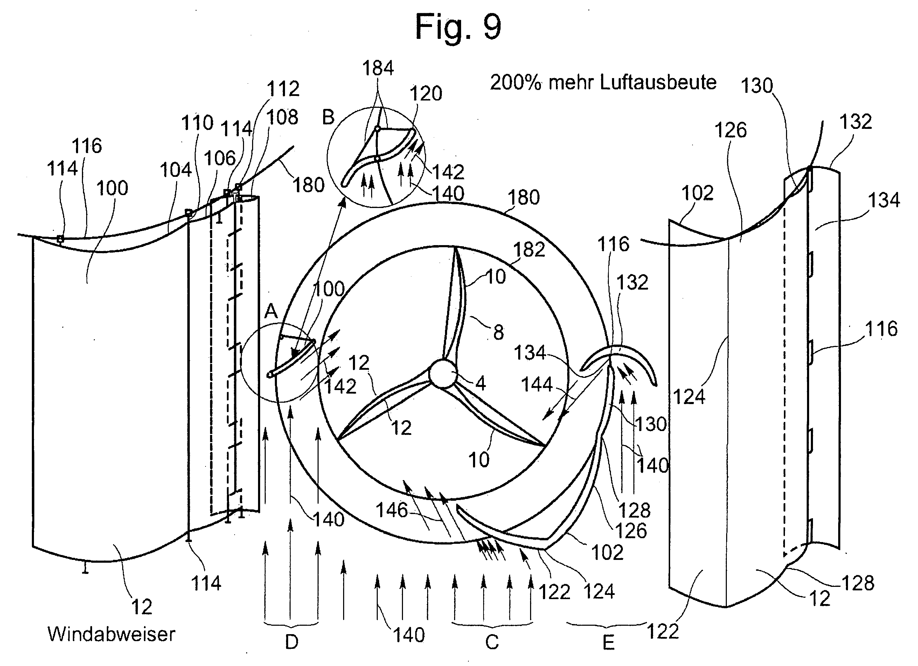

Fig. 9 zeigt eine weitere Ausführungsform eines Windrades gemäß der vorliegenden Erfindung mit einem weiteren Ausführungsbeispiel eines Windableiters. Fig. 9 ist eine Prinzipskizze, die im Mittelbereich das Windrad und die Windableiter oder Windabweiser in Draufsicht zeigt. Die Bezugsziffer 100 bezeichnet den Windableiter an der linken Seite von Fig. 9, der in dem linken Bereich der Fig. 9 dreidimensional dargestellt ist. Die Bezugsziffer 102 im rechten Bereich der Fig. 9 bezeichnet den Windableiter auf der rechten Seite des Windrades, der ganz rechts von Fig. 9 in dreidimensionaler Darstellung dargestellt ist. Es wird davon ausgegangen, dass die in Fig. 9 gezeigte Anordnung im Vergleich zu einem entsprechenden Windrad ohne Windableiter eine etwa 200 %ige Ausbeute der "Windluft oder Windkraft" erzielt, wodurch die Effizienz des Windrades im Vergleich zu Windrädern ohne Windableiter gesteigert werden kann.

Der Läufer 8 rotiert um die vertikale Rotationsachse 4. Die Flügel oder Windschaufeln 10 können, wie mittels der Bezugsziffern 12 dargestellt, mit Solarwandlern, wie beispielsweise Solarzellen, versehen sein. Auch können die Windableiter 100 und 102 bzw. die Oberflächen dieser Windableiter mit Solarwandlern versehen sein.

Wie dem zentralen Bereich von Fig. 9 zu entnehmen ist, ist der Läufer 8 in Draufsicht dargestellt. Die Flügel oder Windschaufeln 10 überstreichen einen ersten Kreisbereich. Auf einem zweiten Kreisbereich, der konzentrisch mit dem ersten Kreisbereich um die Rotationsachse in Fig. 9 dargestellt ist, sind die Windableiter 100 und 102 vorgesehen. Vorzugsweise sind die Windableiter so ausgestaltet, dass sie auf dem zweiten Kreissegment, das einen größeren Radius als das erste Kreissegment aufweist, versetzbar sind. Das zweite Kreissegment weist die Bezugsziffer 180 auf. Das erste Kreissegment ist mit der Bezugsziffer 182 bezeichnet. Der Windableiter 100 ist in der Ansicht A durch die dreidimensionale Ansicht des Windableiters 100 teilweise verdeckt. Die Ansicht B zeigt die Ansicht A ohne Verdeckung durch den Windableiter 100. Wie der Ansicht B zu entnehmen ist, kann der Windableiter 100, der in der Ansicht B mit der Bezugsziffer 120 bezeichnet ist, beispielsweise eine S-förmige Ausgestaltung haben. Ein Mittelbereich des Windableiters 120 ist auf dem Kreissegment 180 angeordnet. Zusätzlich sind zur Stabilisierung Stützen 184 vorgesehen, die beispielsweise auch auf dem zweiten Kreissegment befestigt sind. Das zweite Kreissegment 180 kann beispielsweise eine Schienenanordnung mit entsprechenden Befestigungseinrichtungen sein. Auf diese Art und Weise können die Windableiter 100 (120) und 102 entsprechend der Windrichtung positioniert und ausgerichtet werden.

Nun wird der Windableiter 100 auf der linken Seite der Fig. 9 anhand der dreidimensionalen Darstellung weiter beschrieben. Wie zuvor schon angesprochen, kann der Windableiter 100 mittels entsprechender Befestigungseinrichtungen 114, beispielsweise in einer Schiene, die dem zweiten Kreissegment 180 folgt, befestigt sein. Vorzugsweise ist diese Befestigung derart, dass der Windableiter 100 versetzbar ist. Beispielsweise kann eine elektrische Vorschubeinrichtung vorgesehen werden, die beispielsweise mittels der Solarzellen 12 auf dem Windableiter 100 mit Strom versorgt wird.

Der Windableiter 100 weist ein erstes Segment 104 auf, ein zweites Segment 106 sowie ein drittes Segment 108, die mittels der Gelenke 110 sowie 112 verbunden sind. Das Element 100 weist in Windrichtung einen konvexen Bereich auf mit einer größeren Krümmung als zweiten Bereich 106, der ebenfalls eine konvexe Krümmung in Windrichtung aufweist. Die Windrichtung ist in Fig. 9 mittels der Pfeile 140 angegeben. Eine Hauptachse des Elements 108 steht im Wesentlichen winklig zu einer Hauptachse des Elements 106. Wie in Fig. 9 dargestellt, kann ein Winkel α zwischen dem zweiten Element 106 und dem dritten Element 108 etwa 30° betragen. Dieser Winkel α kann jedoch frei durch das Gelenk 112 eingestellt werden, wodurch die Windableiteigenschaften des Windableiters 100 eingestellt werden können. Das Gelenk kann Luftschächte ausbilden und eine Strömung von einer Seite des Windableiters auf dessen andere Seite ermöglichen. Insgesamt kann durch Ausrichtung der Elemente 100, 106 und 108 die Windableiteigenschaft des Windableiters 100 an die entsprechenden vorherrschenden Windgeschwindigkeiten und Windrichtungen angepasst werden.

Auf dem zweiten Kreissegment 180 oder der Schiene 180 ist in Draufsicht der zweite Windableiter 102 dargestellt. Wie dieser Draufsicht zu entnehmen ist, weist der zweite Windableiter ein bumerangförmiges Element 122 und 126 auf, dessen konvexe Seite der Windrichtung 140 zuweist. Der Knickpunkt 124 des bumerangförmigen Elements 122 und 126 weist vorzugsweise direkt in die Windrichtung 140. Das bumerangförmige Element wird durch die Elemente 122 und 126 gebildet. An das rechte Element 126 des bumerangförmigen Elements schließt sich ein weiteres Element 128 an, welches auf der windzuweisenden Seite ebenfalls eine konvexe Ausgestaltung hat, die jedoch eine andere Krummung aufweist, als das Element 126. An dieses Element 130 schließt sich ein weiteres etwa halbkreisförmiges Element 132 an, welches in etwa in einem Mittelbereich mittels eines Gelenkes 116 mit dem Element 130 verbunden ist. Das Gelenk 116 ist derart ausgestaltet, dass Windkanäle 134 zwischen den Gelenkelementen 116 verbleiben, so dass Wind durch diese Kanäle 134 hindurchgeführt werden kann. Das Element 132 ist vorzugsweise derart bezüglich der Windrichtung 140 ausgerichtet, dass das offene Kreissegment der Windrichtung zugerichtet ist, wie in Fig. 9 dargestellt.

Die Funktionsweise dieser Vorrichtung wird nun mit Verweis auf die Draufsicht im Zentralbereich der Fig. 9 sowie die dreidimensionalen Ansichten in den Seitenbereichen der Fig. 9 weiter beschrieben werden. Wie in Fig. 9 dargestellt, kommt der Wind von unten und ist in Fig. 9 mit den Pfeilen 140 angedeutet. Sobald eine Windströmung 140 auf das Element 122 auftrifft, wird die Windströmung nach links abgelenkt, wie mittels der Pfeile 146 dargestellt ist. Die Windströmung 146 wird also derart gelenkt, dass sie vorzugsweise direkt auf die Aufnahmebereiche des Flügels oder der Windschaufel 10 trifft. Auf diese Art und Weise wird nun zusätzlich Wind von der Fläche, die von dem Knickpunkt 124 bis zu dem linken Ende des Elements 122 weist, in Richtung des Arbeitsflügels geleitet. In anderen Worten wird eine Nutzung eines Bereichs C der Windströmung 140 durch die Ableitung mittels des zweiten Windableiters 102, wie mittels der Pfeile 146 angedeutet, auf den Flügel 10 ermöglicht.

In ähnlicher Art und Weise funktioniert der Windableiter 100 auf der linken Seite von Fig. 9. Durch das Positionieren des Windableiters 100 wird der Bereich der nutzbaren Windströmung 140 um einen Bereich D vergrößert, da die Windströmung 140 entlang den Elementen 104, 106 und 108 des Windableiters 100, wie mittels der Pfeile 142 angedeutet, umgelenkt wird und auf die in Fig. 9 nach oben weisende Schaufel 10 auftrifft und dort Arbeit verrichtet.

Durch die Ausgestaltung des zweiten Windableiters 102 wird überdies eine Mehrnutzung der Windströmung 140 in dem Bereich von dem Knickpunkt 122 zu dem rechten Ende des Elements 132 ermöglicht. Der Wind wird entlang der Elemente 126, 128 und 130 auf das Element 132 gelenkt, wodurch der Wind durch die Kanäle 132 kanalisiert wird und dann von hinten auf die Arbeitsfläche des nach rechts unten weisenden Flügels auftrifft und dort Arbeitsleistung vollbringt.

Durch die in Fig. 9 gezeigte Anordnung werden alle drei Flügel des Windrades gleichzeitig mit Wind beaufschlagt. Dies verringert eine Last auf die vertikale Rotationsachse 4, da eine ausgeglichenere Kraftverteilung auf die Flügel 10 ausgeführt wird. Vorzugsweise sind, wie in Fig. 9 dargestellt, die Windableiter 100 und 102 im Wesentlichen identisch ausgestaltet und können in wesentlichen Bereichen entlang des zweiten Kreissegments 180 verschoben werden. Die Elemente 132 und 118 können jeweils frei verdreht werden, wo, wie anhand des rechten Windableiters 102 dargestellt, Luftkanäle 132 ausgebildet sind, die sogar noch überdies eine Kanalisierung des Windes ermöglichen, wodurch eine Geschwindigkeitserhöhung der Windströmung erzielt werden kann.

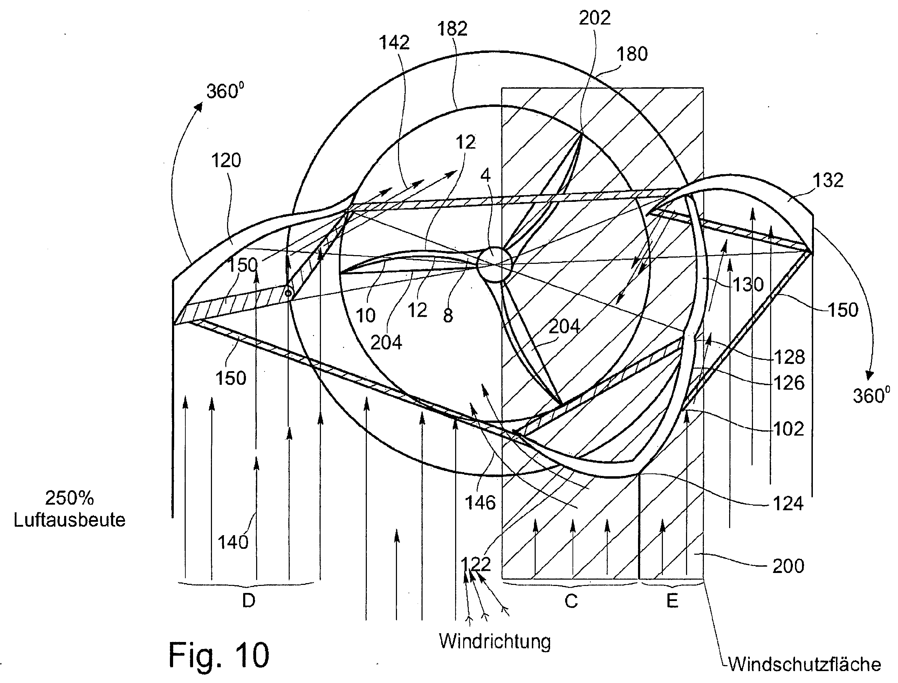

Fig. 10 zeigt eine Draufsicht auf eine weitere vorteilhafte Ausgestaltung des Windrades gemäß der vorliegenden Erfindung. Wie Fig. 10 zu entnehmen ist, weist die Anordnung Windableiter oder Elemente derart auf, dass der Wind mit der Windrichtung 140 im Wesentlichen auf alle Flügel des Läufers 8 verteilt wird. Dafür ist ein Element 120 vorgesehen, das den Wind von der linken Seite von Fig. 10 in Richtung Schaufel 202 kanalisiert. Durch das Element 122 wird neben dem gerade auf die Schaufel 204 auftreffenden Wind auch noch zusätzlich Wind aus dem Bereich C in Richtung der Schaufel 104 geleitet, wie mittels der Pfeile 146 angedeutet ist. Der Bereich des Windes, der mit E bezeichnet ist, wird entlang der Elemente 126, 128, 130 auf das Element 132 geleitet und von dort auf die Arbeitsfläche des Flügels 204. Die Elemente 120, 122, 126, 130, 132 können mit entsprechenden Stabwerken 150 verbunden sein und über entsprechende Gelenke gegeneinander versetzbar bzw. auf dem Kreissegment 180 versetzbar sein. Vorzugsweise ist damit eine Anpassung der Windableiter 120 und 102 entsprechend den Windstärken und Windrichtung möglich. Die schraffierte Fläche, die mit der Bezugsziffer 200 bezeichnet ist, bezeichnet die insgesamt von dem Windableiter 102 ermöglichte Windschutzfläche, um Wind von dem Bereich des Rotors 8 abzuhalten, auf dem die Windströmung 140 eine Kraft entgegen der Drehrichtung des Rotors bewirken würde.

## Patentansprüche

1. Windkraftanlage, umfassend:
einen Läufer (8);
zumindest einen Solarwandler (12) zur Wandlung von Sonnenenergie in eine der Sonnenenergie unterschiedliche Energieform;
wobei der zumindest ein Solarwandler an dem Läufer angeordnet ist.

2. Windkraftanlage nach Anspruch 1,
wobei der Läufer ein Widerstandsläufer ist.

3. Windkraftanlage nach einem der Ansprüche 1 oder 2,
wobei der Läufer eine vertikale Rotationsachse (4) aufweist.

4. Windkraftanlage nach einem der Ansprüche 1 bis 3,
wobei der zumindest eine Solarwandler zumindest eine Solarzelle aufweist, zur Wandelung von Solarenergie in elektrische Energie.

5. Windkraftanlage nach einem der Ansprüche 1 bis 4, ferner umfassend:
einen Windableiter (30);
wobei eine Anordnung des Windableiters derart an die Windrichtung anpassbar ist, dass der Windableiter in Windrichtung vor dem Läufer angeordnet ist.

6. Windkraftanlage nach einem der Ansprüche 1 bis 5,
wobei die Windkraftanlage zur Kopplung an eine Wasserstofferzeugungseinrichtung (56) ausgestaltet ist.

7. Windableiter für eine Windkraftanlage mit einem Widerstandsläufer mit vertikaler Rotationsachse, wobei der Windableiter umfasst:
zumindest eine Windableitfläche (34);
wobei die Windableitfläche derart ausgestaltet ist, dass eine erste Windströmung (84) von einem ersten Bereich des Läufers, in dem die erste Windströmung auf den Läufer eine Kraft entgegen der Drehrichtung des Läufers verursacht, weggeleitet wird; und
wobei die Windableitfläche derart ausgestaltet ist, dass eine zweite Windströmung (86) auf einem zweiten Bereich des Läufers, in dem die zweite Windströmung auf den Läufer eine Kraft in der Drehrichtung des Läufers verursacht, geleitet wird.

8. Windableiter nach Anspruch 7, ferner umfassend:
eine Halterung (32);
wobei die Halterung derart drehbar um die Rotationsachse ausgestaltet ist, dass eine Position der Windableitfläche der Windrichtung anpassbar ist; und
wobei an dem Windableiter zumindest ein Solarwandler vorgesehen ist.

9. Windableiter nach einem der Ansprüche 7 oder 8,
wobei die Windableitfläche einen im Wesentlichen konvexen Bereich oder zwei im wesentlichen konkave Bereiche aufweist.

10. Steuergerät (66) für eine Windkraftwasserstofferzeugungseinrichtung, wobei die Windkraftwasserstofferzeugungseinrichtung eine Windkraftanlage sowie eine an die Windkraftanlage gekoppelte Wasserstofferzeugungsanlage aufweist, wobei das Steuergerät umfasst:
ein erstes Modul (68) zur Steuerung der Windkraftanlage; und
ein zweites Modul (70) zur Steuerung der Wasserstofferzeugungsanlage;
wobei beide Module zu einer gekoppelten Steuerung zusammengefasst sind.

11. Wasserstofferzeugungseinrichtung, wobei die Wasserstofferzeugungseinrichtung zur Kopplung mit einer Windkraftanlage ausgestaltet ist.

12. Wasserstofferzeugungseinrichtung nach Anspruch 11,
wobei ein Wasserstofftank (64) zur Speicherung des Wasserstoffs, der mittels der durch Windkraft erzeugten Energie erzeugt worden ist.

13. Wasserstofferzeugungseinrichtung nach einem der Ansprüche 11 oder 12,
wobei eine Brennstoffzelle vorgesehen ist.
